# EUROPEAN PATENT APPLICATION

(11) **EP 3 167 736 A1**
(43) Date of publication of application: **17.05.2017**
(21) Application number: 16188976.1
(22) Date of filing: 15.09.2016
(51) Int. Cl.: A42B 3/04

(54) **HELMET WITH BLIND SPOT ASSISTANT FUNCTION**

(30) Priority: 11.11.2015 TW 104218111
(71) Applicant: Jarvish Inc., Taipei City (TW)
(72) Inventor: Younger, Liang, (R.O.C.) Taipei City (TW)
(74) Representative: Klemm, Rolf

(57) **Abstract**

A helmet (1) with blind spot assistant function includes a helmet body (10), a gesture sensation unit (20), at least one camera unit (30), a display unit (40) and a control unit (50). According to a gesture sensation signal generated by the gesture sensation unit, the control unit generates a control signal to control and activate the camera unit to generate video information for the display unit to display the video information. Accordingly, when a user wears the helmet, the user can keep watching the front side and at the same time observe the environmental condition in the blind spots so as to enhance the safety.

## Description

This application claims the priority benefit of Taiwan patent application number 104218111 filed on November 11, 2015.

### BACKGROUND OF THE INVENTION

### 1. Field of the Invention

The present invention relates generally to a helmet, and more particularly to a helmet with blind spot assistant function. When a user wears the helmet, the user can keep watching the front side and at the same time observe the environmental condition in the blind spots so as to enhance the safety.

### 2. Description of the Related Art

It is known that in various activities, a person often needs to wear a helmet. For example, but not limited to, when riding power machinery (motorcycle), riding a bicycle, skiing or ice skating, a rider or a player must wear a helmet. There are various helmets for different activities. However, the most important function of all these helmets is to protect the parts above a user's neck and prevent the user's head from getting hurt.

However, in the various activities, a user needs to concentrate his/her attention on the front side and can hardly fully observe the condition in a blind spot, (such as the condition behind the head). When wearing a helmet, there will be more blind spots to the user. In the various activities, the user often needs to turn his/her head to observe the condition in the blind spots, (such as the condition behind the head). Under such circumstance, the line of sight of the user will deviate from the front side that needs to be watched. As a result, an accident may take place to the user.

It is therefore tried by the applicant to provide a helmet with blind spot assistant function. When a user wears the helmet, the user can keep watching the front side and at the same time observe the environmental condition in the blind spots so as to enhance the safety.

### SUMMARY OF THE INVENTION

It is therefore a primary object of the present invention to provide a helmet with blind spot assistant function. When a user wears the helmet, the user can keep watching the front side so as to enhance the safety.

It is a further object of the present invention to provide the above helmet with blind spot assistant function. When a user wears the helmet, the user can keep watching the front side and at the same time observe the environmental condition in the blind spots.

To achieve the above and other objects, the helmet with blind spot assistant function of the present invention includes: a helmet body having a front side formed with an observation window; a gesture sensation unit disposed on the helmet body for detecting the gesture of the helmet body to generate at least one gesture sensation signal; at least one camera unit disposed in a certain position of the helmet body other than the observation window for generating video information; a display unit disposed on the helmet body for displaying the video information generated by the camera unit; and a control unit disposed on the helmet body and connected to the gesture sensation unit, the camera unit and the display unit, according to the gesture sensation signal, the control unit generating a control signal to control and activate the camera unit to generate the video information for the display unit to display the video information. According to the above, when a user wears the helmet with blind spot assistant function, the user can keep the line of sight to the front side and at the same time observe the environmental condition in the blind spots so as to enhance the safety.

In the above helmet with blind spot assistant function, a protection visor is correspondingly disposed at the observation window of the helmet body. The protection visor is transparent or semitransparent.

In the above helmet with blind spot assistant function, the display unit has a projection unit for projecting the video information onto the protection visor.

In the above helmet with blind spot assistant function, the display unit is a flexible display disposed on the protection visor.

In the above helmet with blind spot assistant function, the gesture sensation unit has a gyroscope, an accelerometer and an electronic compass.

In the above helmet with blind spot assistant function, according to the rotation of the helmet body, the gyroscope generates an angular velocity signal and transmits the angular velocity signal to the control unit.

In the above helmet with blind spot assistant function, according to the linear motion of the helmet body, the accelerometer generates an acceleration signal and transmits the acceleration signal to the control unit.

In the above helmet with blind spot assistant function, according to the moving direction of the helmet body, the electronic compass generates a magnetic flux signal and transmits the magnetic flux signal to the control unit.

According to the above, when a user wears the helmet with blind spot assistant function, the user can keep the line of sight to the front side and at the same time observe the environmental condition in the blind spots so as to enhance the safety.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1a is a perspective view of a first embodiment of the present invention;
Fig. 1b is a side view of the first embodiment of the present invention;
Fig. 2 is a block diagram of the first embodiment of the present invention, showing the function thereof;
Fig. 3 is a perspective view of a second embodiment of the present invention;
Fig. 4 is a block diagram of the second embodiment of the present invention, showing the function thereof;
Fig. 5 is a perspective view showing the multiple camera units of the present invention;
Fig. 6 is a schematic view showing that the video information is displayed on the protection visor of the present invention; and
Fig. 7 is a schematic view showing that the present invention is applied to a motorcycle helmet.

### DETAILED DESCRIPTION OF THE PREFERRED EMBODIMENTS

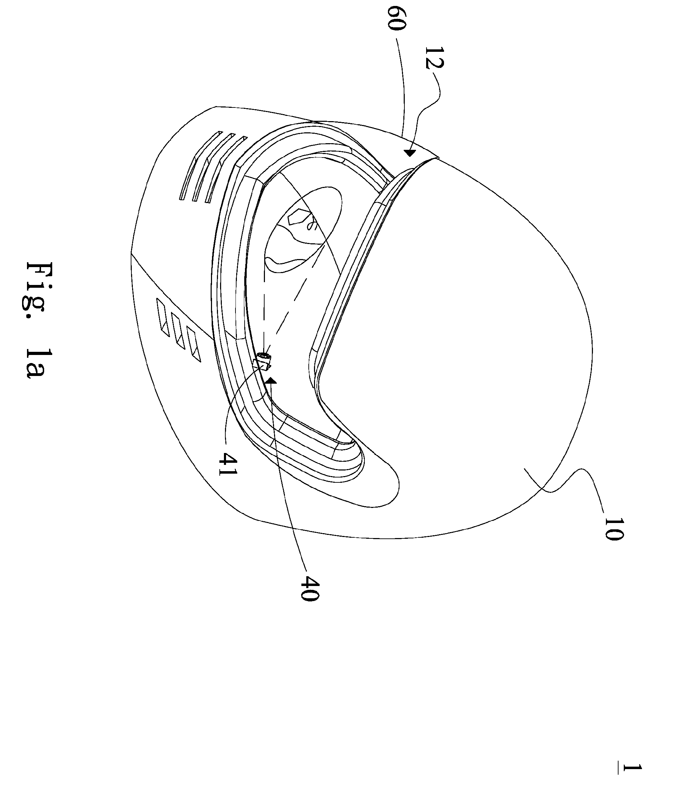

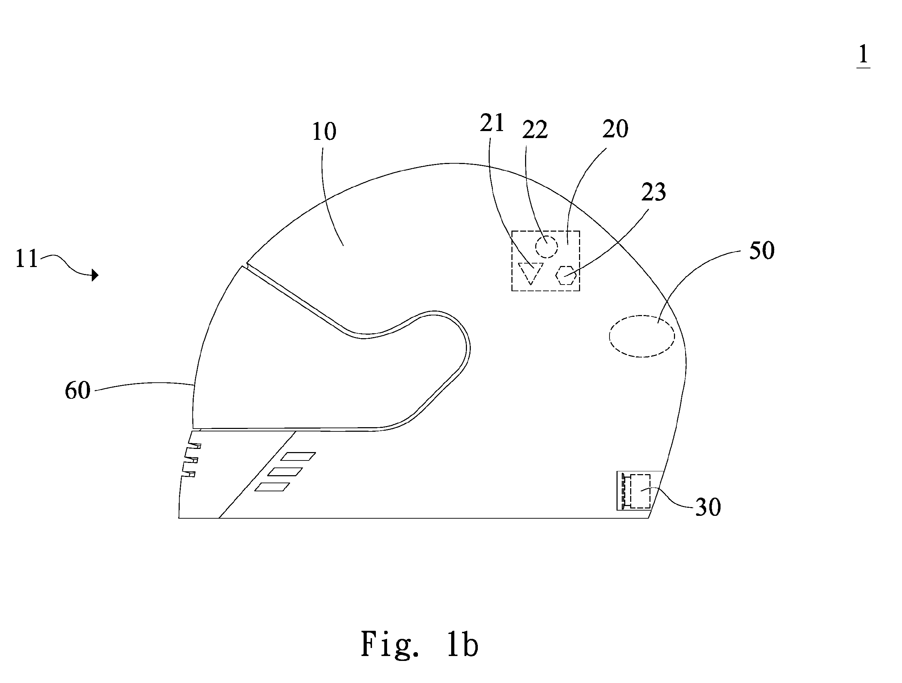

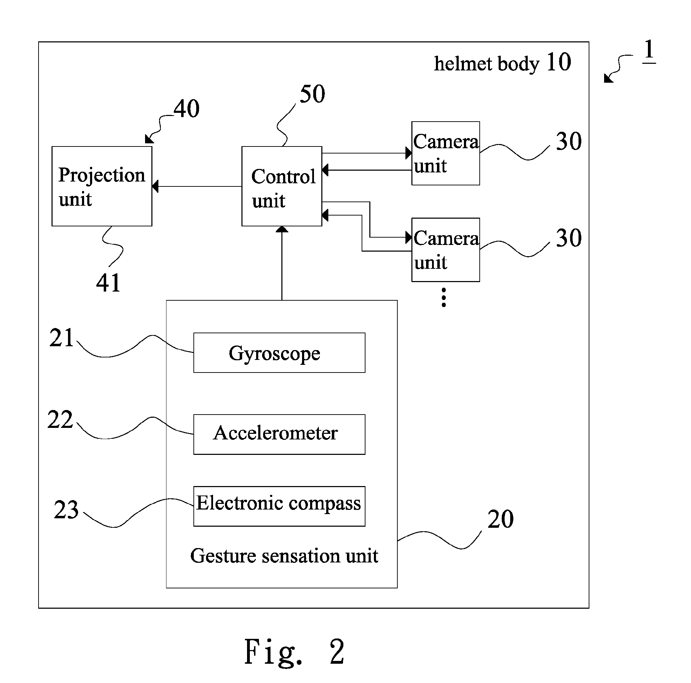

Please refer to Figs. 1a, 1b and 2. Fig. 1a is a perspective view of a first embodiment of the present invention. Fig. 1b is a side view of the first embodiment of the present invention. Fig. 2 is a block diagram of the first embodiment of the present invention, showing the function thereof. In this embodiment, the helmet 1 with blind spot assistant function of the present invention is, but not limited to, a motorcycle helmet for illustration purposes. In practice, the helmet 1 can be any kind and type of helmet. The helmet 1 with blind spot assistant function includes a helmet body 10, a gesture sensation unit 20, at least one camera unit 30, a display unit 40 and a control unit 50.

The helmet body 10 has a front side 11 formed with an observation window 12. A protection visor 60 is correspondingly disposed at the observation window 12. The protection visor 60 can be transparent or semitransparent.

The gesture sensation unit 20 is disposed on the helmet body 10 for detecting the gesture of the helmet body 10 to generate at least one gesture sensation signal. The gesture sensation unit 20 has a gyroscope 21, an accelerometer 22 and an electronic compass 23. According to the rotation of the helmet body 10, the gyroscope 21 generates an angular velocity signal. The angular velocity signal contains three axial data. According to the linear motion of the helmet body 10, the accelerometer 22 generates an acceleration signal. The acceleration signal contains three axial data. According to the moving direction of the helmet body 10, the electronic compass 23 generates a magnetic flux signal. The angular velocity signal, the acceleration signal and the magnetic flux signal are the at least one gesture sensation signal. The angular velocity signal, the acceleration signal and the magnetic flux signal are transmitted to the control unit 50.

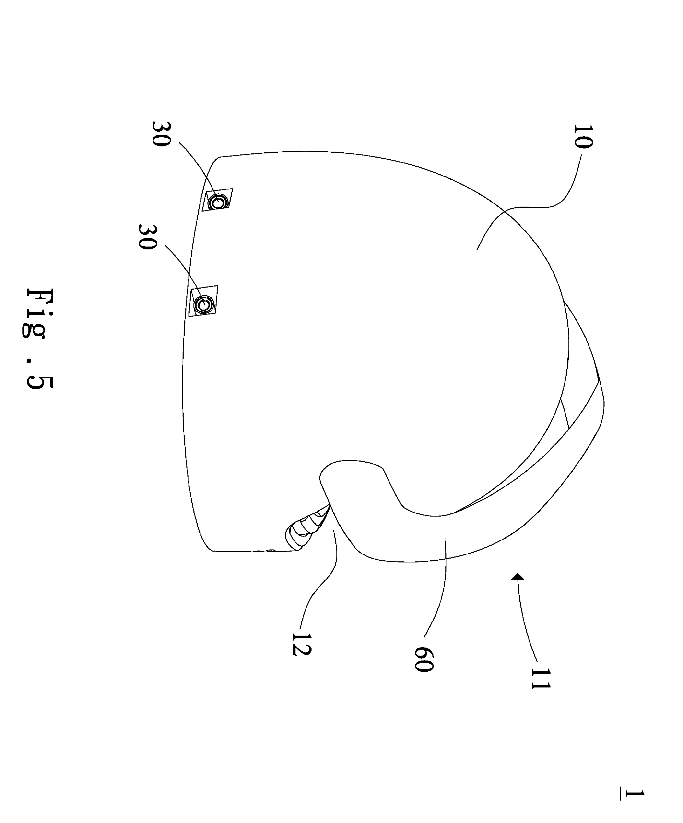

The camera unit 30 is disposed in a certain position of the helmet body 10 other than the observation window 12 for generating video information. The camera unit 30 can be dashboard camera, a video lens or any equivalent thereof. It should be noted that in this embodiment, the number of the at least one camera unit 30 is, but not limited to, one for illustration purposes. In a modified embodiment, there are two camera units 30 (as shown in Fig. 5) for generating different video information in accordance with different directional angles. Preferably, the camera units 30 are inlaid in the helmet body 10 (as shown in Fig. 1b).

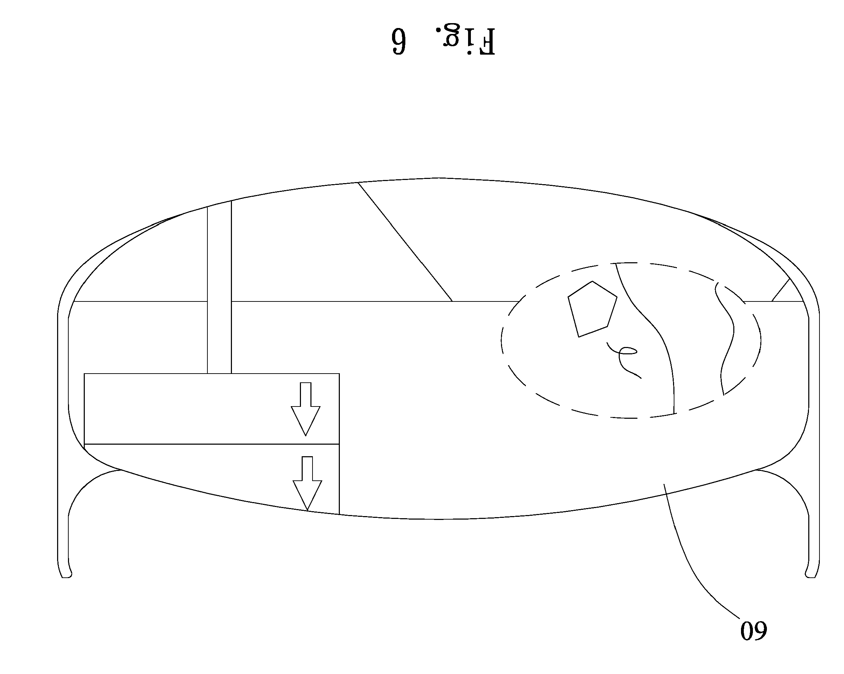

The display unit 40 is disposed on the helmet body 10 for displaying the video information generated by the camera units 30. The display unit 40 has a projection unit 41 for projecting the video information onto the protection visor 60 (as shown in Fig. 6). The projection unit 41 can be a micro projector or any equivalent thereof.

The control unit 50 is disposed on the helmet body 10 and connected to the gesture sensation unit 20, the camera unit 30 and the display unit 40. According to the gesture sensation signal, (that is, the angular velocity signal, the acceleration signal and the magnetic flux signal), the control unit 50 generates a control signal to control and activate the camera unit 30 to generate the video information. The display unit 40 serves to display the video information. The control unit 50 can be a microcontroller unit (MCU) or a central processing unit (CPU) or any equivalent thereof. The control unit 50 can be set with a threshold value *α*. The control unit 50 uses the three axial data of the acceleration signal as the calculation parameters. In addition, the control unit 50 cooperatively uses the three axial data of the angular velocity signal and the magnetic flux signal as the correction parameters to generate a gesture value *β*. In case the gesture value *β* is higher than (or lower than) the threshold value *α*, then the control unit 50 generates the control signal to control the camera unit 30 to take the video image, (that is, generate the video information). The display unit 40 then displays the video image taken by the camera unit 30, (that is, displays the video information). In a modified embodiment, the three axial data of the angular velocity signal can be set to be zero as a comparison value *γ*. When the helmet body 10 is rotated, the three axial data of the angular velocity signal are deviated from the comparison valuer *γ*. The three axial data of the angular velocity signal deviated from the comparison value *γ* serve as the calculation parameters. The control unit 50 cooperatively uses the three axial data of the acceleration signal and the magnetic flux signal as the correction parameters to generate a gesture value *β*. In case the gesture value *β* is higher than (or lower than) the threshold value *α*, then the control unit 50 generates the control signal to control the camera unit 30 to take the video image, (that is, generate the video information). In other embodiments, the control unit 50 respectively gives the three axial data of the angular velocity signal and the three axial data of the acceleration signal and the magnetic flux signal different weights to make calculation and generate a gesture value *β*. In case the gesture value *β* is higher than (or lower than) the threshold value *α*, then the control unit 50 generates the control signal to control the camera unit 30 to take the video image, (that is, generate the video information). However, it should be noted that in practice, the way to generate the control signal is not limited to the above manners. Alternatively, the control signal can be generated in any other manner.

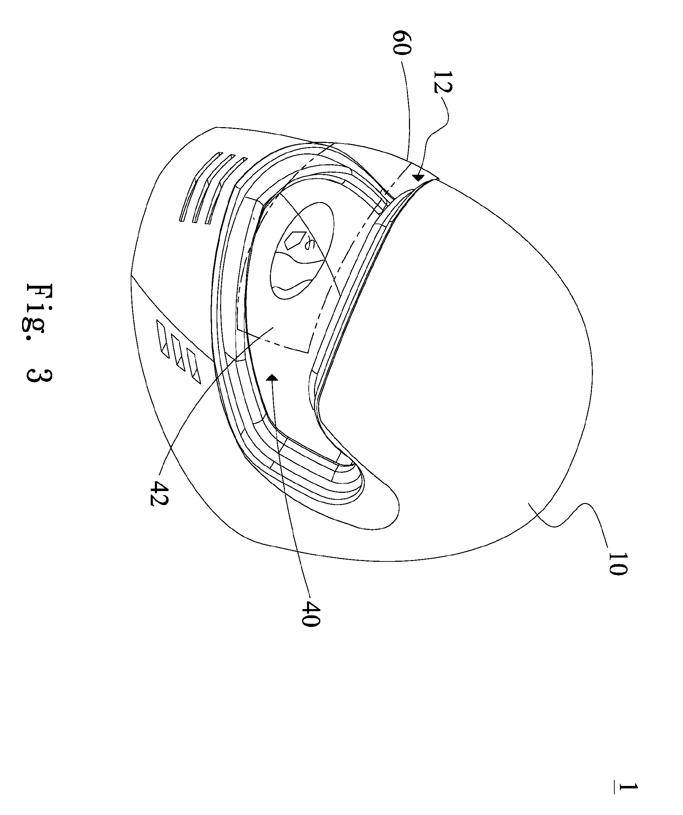

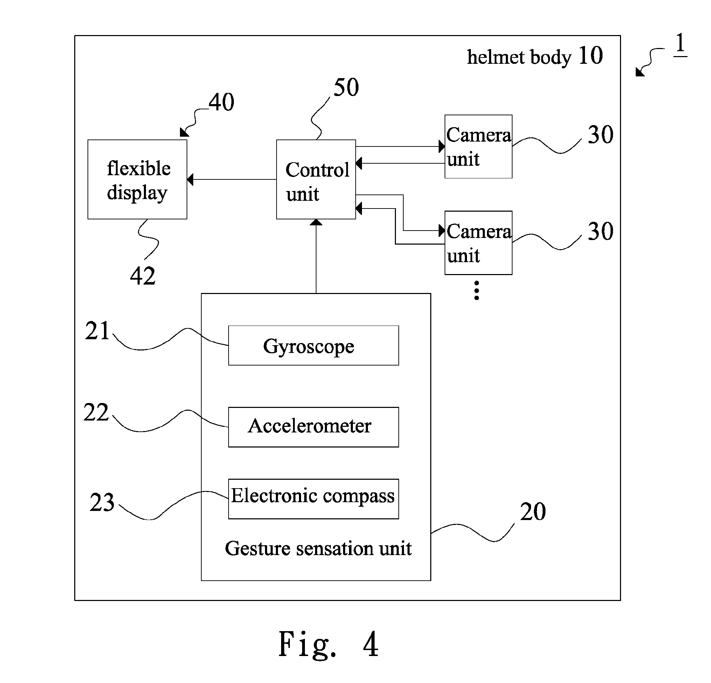

Please now refer to Figs. 3 and 4. Fig. 3 is a perspective view of a second embodiment of the present invention. Fig. 4 is a block diagram of the second embodiment of the present invention, showing the function thereof. The second embodiment is substantially partially identical to the first embodiment in structure, component, function and effect and thus will not be repeatedly described hereinafter. The second embodiment is different from the first embodiment in that the display unit 40 is a flexible display 42 disposed on the protection visor 60. The video information generated by the camera unit 30 is displayed by the flexible display 42 on the protection visor 60. Accordingly, when a user wears the helmet 1 with blind spot assistant function, the user can keep the line of sight substantially to the front side and at the same time observe the environment behind the helmet to know whether there is any dangerous situation so as to enhance the safety. The flexible display 42 can be a transparent-flexible display or any equivalent thereof.

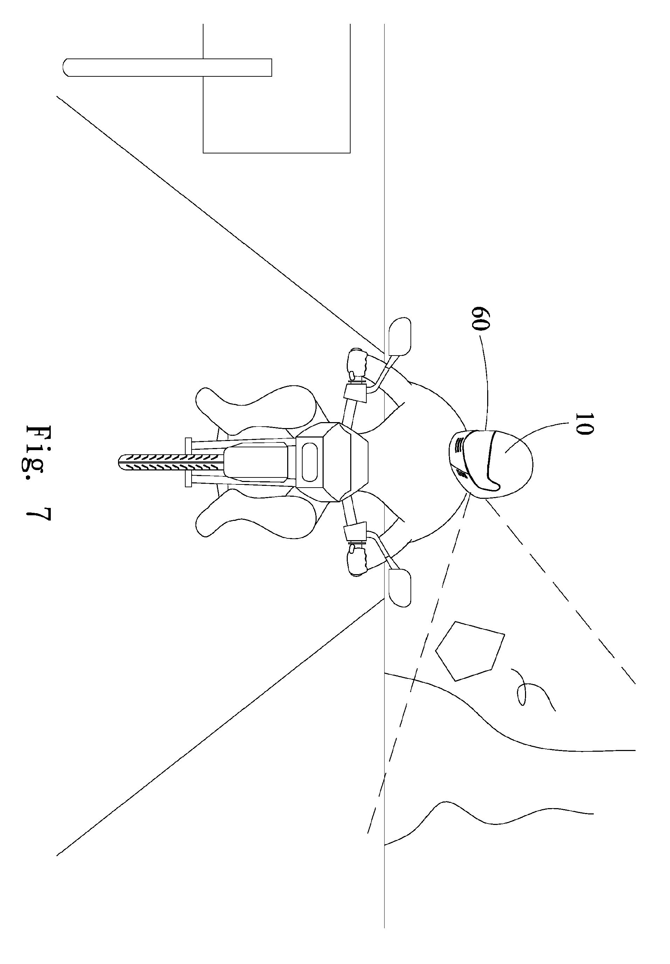

Please now refer to Figs. 6 and 7. Fig. 6 is a schematic view showing that the video information is displayed on the protection visor of the present invention. Fig. 7 is a schematic view showing that the present invention is applied to a motorcycle helmet. As shown in the drawings, in this embodiment, the present invention is applied to, but not limited to, a helmet worn by a rider riding power machinery (motorcycle). In practice, the helmet of the present invention can be any kind and type of helmet. When a user wears the helmet 1 with blind spot assistant function, the helmet body 10 can protect the user's head. Moreover, the user can observe the external environmental condition through the protection visor 60 disposed at the observation window 12. The gesture sensation unit 20 disposed on the helmet body 10 has a gyroscope 21, an accelerometer 22 and an electronic compass 23. When the helmet body 10 is rotated along with the user's head, the gyroscope 21 generates the three axial data of the angular velocity signal. When the helmet body 10 is moved along with the user's head, the accelerometer 22 generates the three axial data of the acceleration signal. When the helmet body 10 is inertly moved in the moving direction of the motorcycle, the electronic compass 23 generates the magnetic flux signal according to the moving direction and transmits the signal to the control unit 50 to generate the control signal for controlling the camera unit 30 to take the video image behind the helmet. Then the projection unit 41 of the display unit 40 projects the video image behind the helmet onto the protection visor 60. Accordingly, when a user wears the helmet 1 with blind spot assistant function to ride a motorcycle, the user can keep the line of sight substantially to the front side and at the same time observe the environment behind the helmet to know whether there is any dangerous situation so as to enhance the safety.

According to the above, when a user wears the helmet 1 with blind spot assistant function, the user can keep the line of sight to the front side and at the same time observe the environmental condition in the blind spots so as to enhance the safety.

The present invention has been described with the above embodiments thereof and it is understood that many changes and modifications in such as the form or layout pattern or practicing step of the above embodiments can be carried out without departing from the scope and the spirit of the invention that is intended to be limited only by the appended claims.

## Claims

1. A helmet with blind spot assistant function, comprising:
a helmet body having a front side formed with an observation window;
a gesture sensation unit disposed on the helmet body for detecting the gesture of the helmet body to generate at least one gesture sensation signal;
at least one camera unit disposed in a certain position of the helmet body other than the observation window for generating video information;
a display unit disposed on the helmet body for displaying the video information generated by the camera unit; and
a control unit disposed on the helmet body and connected to the gesture sensation unit, the camera unit and the display unit, according to the gesture sensation signal, the control unit generating a control signal to control and activate the camera unit to generate the video information for the display unit to display the video information.

2. The helmet with blind spot assistant function as claimed in claim 1, wherein a protection visor is correspondingly disposed at the observation window of the helmet body, the protection visor being transparent or semitransparent.

3. The helmet with blind spot assistant function as claimed in claim 2, wherein the display unit has a projection unit for projecting the video information onto the protection visor.

4. The helmet with blind spot assistant function as claimed in claim 2, wherein the display unit is a flexible display disposed on the protection visor.

5. The helmet with blind spot assistant function as claimed in claim 1, wherein the gesture sensation unit has a gyroscope, an accelerometer and an electronic compass.

6. The helmet with blind spot assistant function as claimed in claim 5, wherein according to the rotation of the helmet body, the gyroscope generates an angular velocity signal and transmits the angular velocity signal to the control unit.

7. The helmet with blind spot assistant function as claimed in claim 5, wherein according to the linear motion of the helmet body, the accelerometer generates an acceleration signal and transmits the acceleration signal to the control unit.

8. The helmet with blind spot assistant function as claimed in claim 5, wherein according to the moving direction of the helmet body, the electronic compass generates a magnetic flux signal and transmits the magnetic flux signal to the control unit.
